# EUROPÄISCHE PATENTSCHRIFT

(11) **EP 2 320 015 B1**
(45) Veröffentlichungstag und Bekanntmachung des Hinweises auf die Patenterteilung: **23.09.2020**
(21) Anmeldenummer: 10013852.8
(22) Anmeldetag: 21.10.2010
(51) Int. Cl.: E05D 1/02, E04F 10/00, F03G 7/06

(54) **Gelenkloser, stufenlos verformbarer Klappmechanismus**
Hingeless, infinitely deformable folding mechanism
Mécanisme de repli sans articulation, déformable en continu

(30) Priorität: 10.11.2009 DE 102009053569
(43) Veröffentlichungstag der Anmeldung: 11.05.2011
(73) Patentinhaber: Universität Stuttgart, 70174 Stuttgart (DE); Albert-Ludwigs-Universität Freiburg, 79085 Freiburg (DE)
(72) Erfinder: Schleicher, Simon, 70176 Stuttgart (DE); Lienhard, Julian, 70192 Stuttgart (DE); Knippers, Jan, 70188 Stuttgart (DE); Poppinga, Simon, 79106 Freiburg i. Br. (DE); Masselter, Tom, 79102 Freiburg i. Br. (DE); Speck, Thomas, 79227 Schallstadt-Mengen (DE)
(74) Vertreter: Glawe, Delfs, Moll

(56) Entgegenhaltungen:
- WO-A2-2007/014640
- WO-A2-2009/112933

## Beschreibung

### Gebiet der Erfindung

Die Erfindung betrifft eine Fassadenverschattung umfassend einen gelenklosen, stufenlos verformbaren Klappmechanismus und darauf beruhende Verschattungs- und Sichtschutzsysteme in der Architektur. Es werden außerdem adaptive Klappmechanismen für Luft- und Raumfahrttechnik, Motoren und Fahrzeugtechnik, Medizin, Verfahrenstechnik, sowie Inneneinrichtung bzw. Möbel offenbart.

### Stand der Technik

Wandelbare, bewegliche und kinematische Konstruktionen bestehen typischerweise aus Starrkörpern, die über Knoten gelenkig miteinander verbunden sind, oder aus raffbaren und/oder druckschlaffen Konstruktionen. Dies gilt insbesondere für Klappmechanismen. Gelenke sind typischerweise die Schwachstellen solcher Konstruktionen, da sie Lastkonzentrationen bei gleichzeitiger Bewegung ausgesetzt sind und somit einen großen Verschleiß und den damit verbundenen Wartungsaufwand mit sich ziehen.

In der Natur, sowohl bei Pflanzen als auch bei Tieren, gibt es eine Vielzahl von Bewegungsmechanismen, die auf der Nachgiebigkeit ihrer Komponenten beruhen. Neue Faserverbundwerkstoffe, die eine hohe Bruchfestigkeit mit einer niedrigen Steifigkeit (hohe Bruchdehnung) kombinieren, ermöglichen jetzt auch in der Technik wandelbare Konstruktionen auf Grundlage der reversiblen Elastizität ihrer biegesteifen Bauteile.

### Kurzbeschreibung der Erfindung

Gegenstand der vorliegenden Erfindung ist eine Fassadenverschattung umfassend einen gelenklosen, stufenlos verformbaren Klappmechanismus, bei dem die Ausrichtung eines flächigen Bauteils (2) graduell und stufenlos verändert werden kann (seitliches Umbiegen bzw. Umklappen) durch Biegen eines angeschlossenen, gedrungenen und/oder flächigen Bauteils (1). Ein weiterer Gegenstand der vorliegenden Erfindung sind Verschattungs- und Sichtschutzsysteme in der Architektur. Es sind außerdem Lüftungs-, Öffnungs- und Schließklappen, adaptive Klappmechanismen für Luft- und Raumfahrttechnik, Motoren und Fahrzeugtechnik, Medizin, Verfahrenstechnik, sowie Inneneinrichtung bzw. Möbel offenbart, in denen der Klappmechanismus zum Einsatz kommt.

### Kurzbeschreibung der Figuren

Fig. 1 zeigt ein abstrahiertes Modell der Blüte der Paradiesvogelblume;
Fig. 2 zeigt ein abstrahiertes Modell der Kinematik der Blüte der Paradiesvogelblume;
Fig. 3 zeigt verschiedene Ausführungsformen des Klappmechanismus';
Fig. 4 zeigt eine erfindungsgemäße Fassadenverschattung;
Fig. 5 zeigt eine weitere Form der erfindungsgemäßen Fassadenverschattung;
Fig. 6 illustriert das Funktionsprinzip eines Klappmechanismus' mit sekundärem Bauteil (2b);
Fig. 7 illustriert das Funktionsprinzip eines Klappmechanismus' mit mehrlagigem Bauteil (1), welches sich durch verschiedene Längenausdehnung der Schichten bei Erwärmung krümmt;
Fig. 8 illustriert das Funktionsprinzip einer weiteren Anordnung von Bauteil (2) auf Bauteil (1).

### Ausführliche Beschreibung der Erfindung

Die Blüte der Paradiesvogelblume (*Strelitzia reginae,* Strelitziaceae) besitzt zwei verwachsene Blütenblätter, die als Sitzstange für bestäubende Vögel dienen. Wird diese Stange durch das Gewicht eines Vogels nach unten gebogen, so werden durch ein gleichzeitiges seitliches Umklappen der Blütenblattlamina die Staubblätter freigelegt.

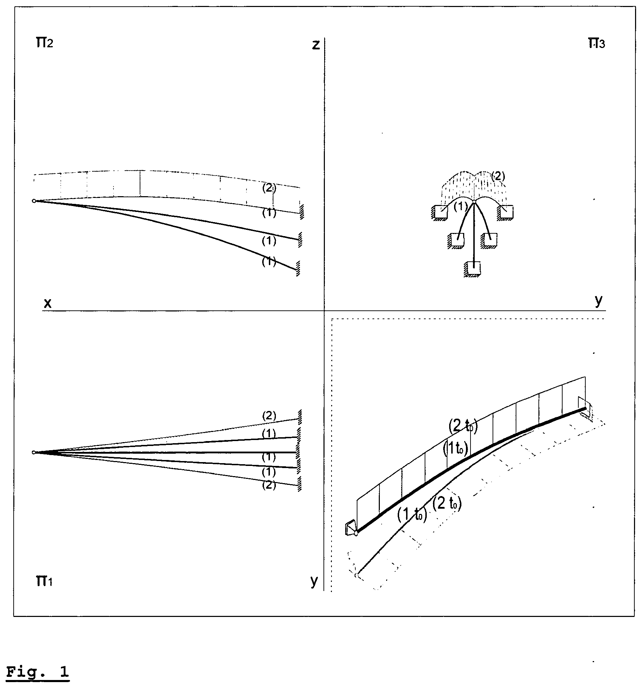

Die Kinematik des Systems wird mittels Dreitafel-Projektion dargestellt (Fig. 1). Hier wird das komplette System der Sitzstange mit den fünf verhärteten Faserbündeln, durch welche die Sitzstange versteift ist, dargestellt. Strang 1 mit der befestigten Lamina 2 zeigt die resultierende Bewegung (Seitwärtsbiegen der Lamina 2 durch Herunterbiegen von Strang 1). Prinzipiell zeigen alle Stränge mit den angebrachten (kurzen) Verbindungslamina das gleiche Verhalten und induzieren als zusammengesetztes System das Auf- und Zuklappen der Sitzstange. Das im rechten unteren Quadranten dargestellte System (nur mit einem Strang 1 und Lamina 2) benötigt ein zusätzliches Auflager, um seitliches Ausweichen des freien Endes zu verhindern.

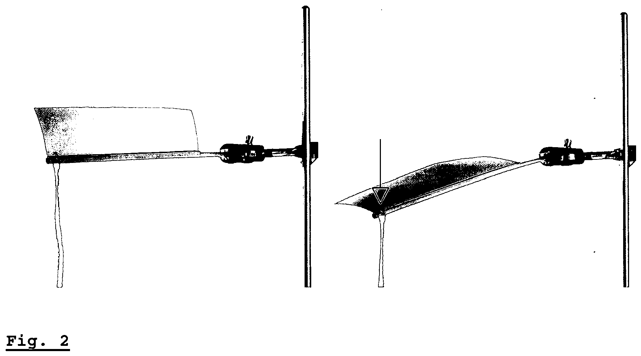

Anhand eines abstrahierten Modells lässt sich das Funktionsprinzip verifizieren. Das physikalische Modell besteht aus einer vertikalen Blattlamelle aus Papier, welche auf einer Kunststoffstange angebracht wurde, die an einem Ende fest eingespannt und am anderen Ende frei ist. Wenn eine vertikale Kraft auf das freie Ende der Stange appliziert wird, biegt sich das Blatt seitwärts um 90° (Fig. 2).

Gegenstand der vorliegenden Erfindung ist eine Fassadenverschattung umfassend einen gelenklosen, stufenlos verformbaren Klappmechanismus bestehend aus einem flächigen Bauteil (2), dessen veränderliche Ausrichtung (seitliches Umbiegen/Klappen) durch Biegen eines angeschlossenen, gedrungenen und/oder flächigen Bauteils (1) in Richtung parallel zur Fläche des flächigen Bauteils graduell und stufenlos eingestellt wird.

Das erste Bauteil (1) ist mit dem zweiten Bauteil (2) so gekoppelt, dass ein Biegen des ersten Bauteils (1) ausgehend von der Ausgangsposition in Richtung parallel zur Fläche des zweiten Bauteils (2) ein seitliches Umklappen des zweiten Bauteils (2) hervorruft.

Das zweite Bauteil (2) entzieht sich auftretenden Biegezugspannungen durch seitliches Umklappen. Es bildet sich eine zu ihrer Ausgangsposition um bis zu 90° seitlich umgeklappte, doppelt gekrümmte Oberfläche im zweiten in Bauteil (2). Der Umklappwinkel ist durch das Maß des Durchbiegens des ersten Bauteils (1) graduell und stufenlos einstellbar und kann stellenweise auch 90° überschreiten. Die hierdurch gespeicherte Federenergie kann zur Durchführung einer reversiblen Bewegung genützt werden.

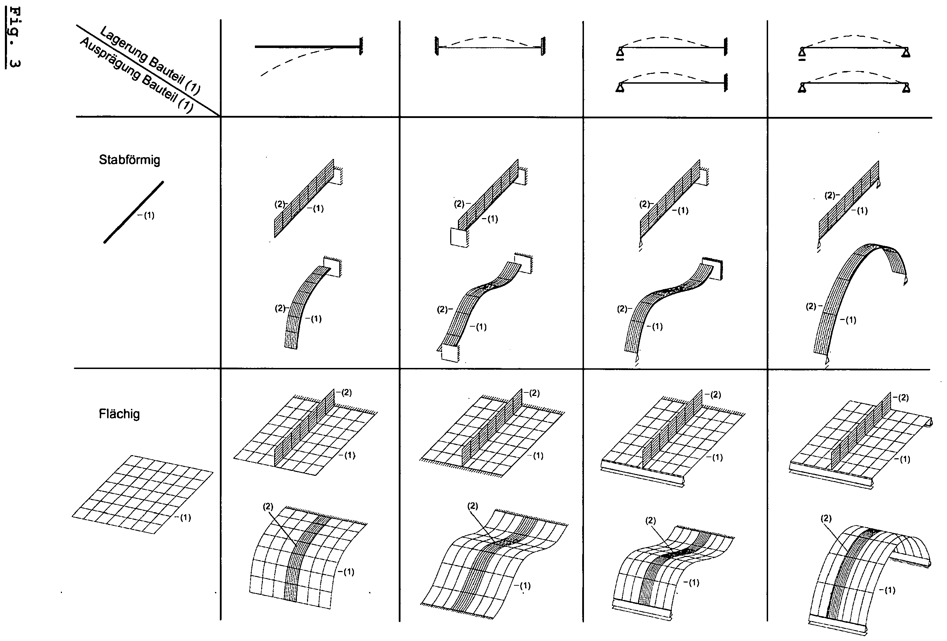

Die Bauteile (1) und (2) können in verschiedenen Formen und/oder deren Kombinationen ausgeführt werden, wie in Fig. 3 dargestellt ist. Diese sind:

| **Bauteil (1)** | **Bauteil (2)** |
|---|---|
| Stabförmig (beliebiger Querschnitt) (Fig. 3 obere Reihe) | flächig |
| flächig (Fig. 3 untere Reihe) | flächig |

Das zweite, flächige Bauteil (2) kann aufgelöst in Stäbe, verbunden durch einen Obergurt, ausgeführt werden. Das erste Bauteil (1) kann durch eine lokale Aussteifung des zweiten Bauteils (2) erzeugt werden. Das zweite Bauteil (2) kann aber auch eine Steifigkeitsreduktion vom ersten Bauteil (1) sein.

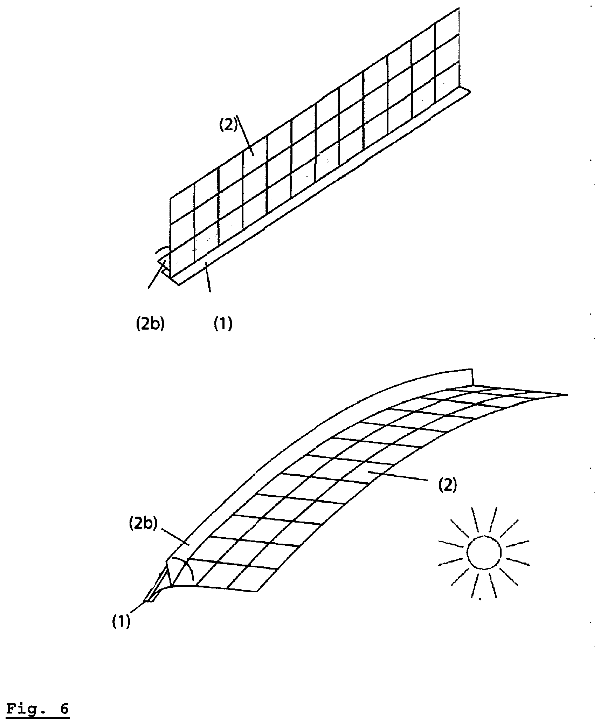

Sekundäre flächige Bauteile auf dem zweiten Bauteil (2) können zur Begünstigung des Rückstellmechanismus appliziert werden. Eine beispielhafte Ausführungsform dieser Variante ist in Fig. 6 dargestellt.

Das erste Bauteil (1) ist an einer Kante des zweiten Bauteils (2) angeschlossen. Die Verbindung zwischen dem ersten Bauteil (1) und dem zweiten Bauteil (2) kann lösbar oder nicht lösbar sein. Die Verbindung kann außerdem steif und/oder elastisch durch Formschluss, Kraftschluss oder Stoffschluss erzeugt werden.

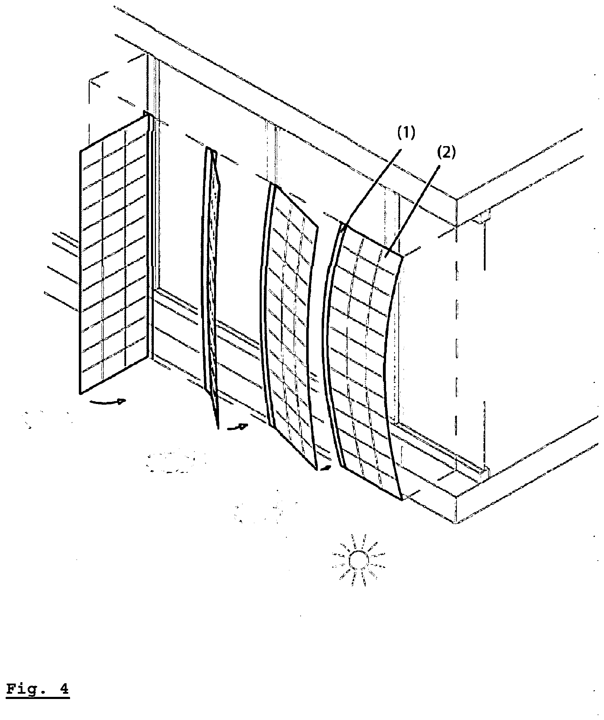

Das erste Bauteil (1) kann folgendermaßen gelagert werden:
- einseitig biegesteif (Fig. 3 , 1 . Spalte);
- beidseitig biegesteif (Fig. 3 , 2 . Spalte);
- biegesteif und gelenkig (Fig. 3, 3 .Spalte);
- beidseitig gelenkig (Fig. 3 , 4 . Spalte).

Die Bauteile (1) und (2) können aus allen Materialien oder Materialkombinationen bestehen. Geeignet sind insbesondere solche mit hoher Bruchdehnung, insbesondere Kunststoffe, faserverstärkte Kunststoffe, Metalle und Holzwerkstoffe.

Die Bauteile (1) und (2) können folgendermaßen positioniert bzw. angeordnet sein:
- einzeln;
- seriell;
- parallel;
- radial;
- freie Anordnungen;
- gekoppelt (sekundäre Lamellen auf Bauteil (2) bzw. sekundäre Lamellen auf Bauteil (1))

Die Biegung des ersten Bauteils (1) kann autonom durch die Materialeigenschaften (z. B. reagierend auf wechselnde Umweltfaktoren wie Licht, Wärme, Feuchtigkeit etc.) oder nicht autonom durch aufgebrachte Lasten, Kräfte und/oder Verschiebungen induziert werden.

Das erste Bauteil (1) kann gerade oder gekrümmt sein. Das zweite Bauteil (2) kann jeglichen Randzuschnitt oder jegliche Vorkrümmung besitzen.

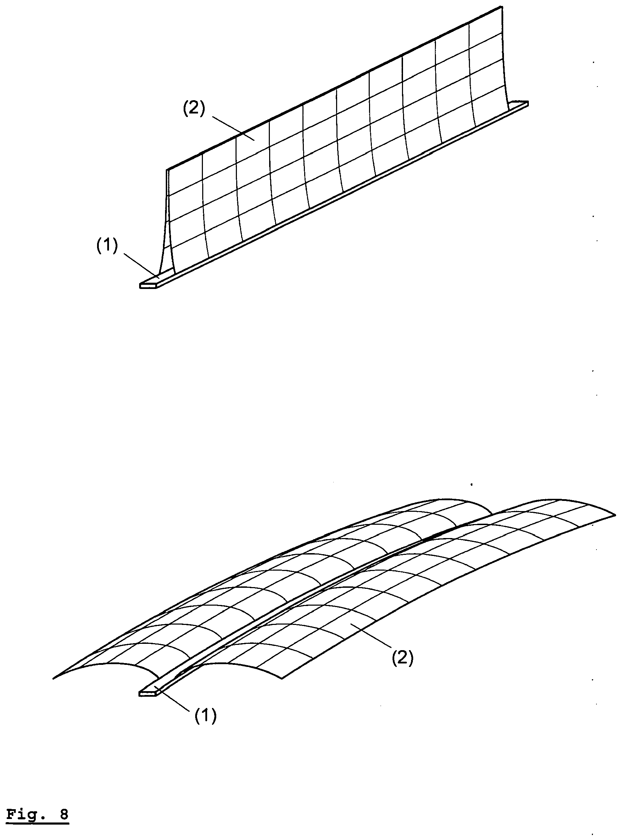

Bei einer Vorkrümmung vom zweiten Bauteil (2) klappt dieses immer in Richtung der konkaven Seite, wodurch sich die bestehende Krümmung verstärkt. Werden also zwei gegensätzlich gekrümmte zweite Bauteile (2) gemeinsam auf ein erstes Bauteil (1) aufgebracht, so erhält man eine Doppelklappe (doppelte Klappe), bei der die beiden zweiten Bauteile (2) in entgegengesetzte Richtungen wegklappen (Fig. 8).

Der gelenklose Klappmechanismus kann überall dort zum Einsatz kommen, wo wandelbare oder bewegliche Klappen oder Lamellen benötigt werden. Zu diesen gehören insbesondere Verschattungs- und Sichtschutzsysteme in der Architektur, Lüftungsklappen, Öffnungs- oder Schließklappen. Denkbar sind auch adaptive Klappmechanismen für Luft- und Raumfahrttechnik, Motoren und Fahrzeugtechnik, Medizin, Verfahrenstechnik, sowie Inneneinrichtung bzw. Möbel.

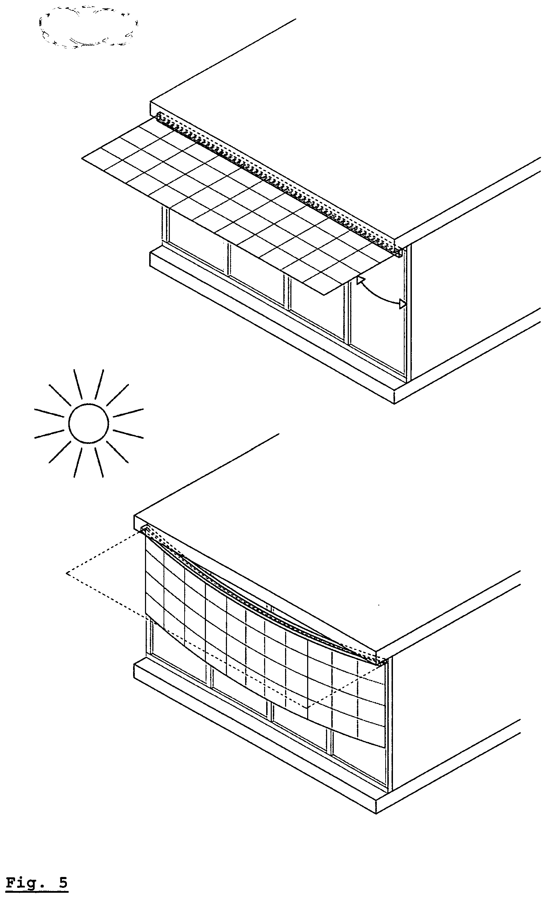

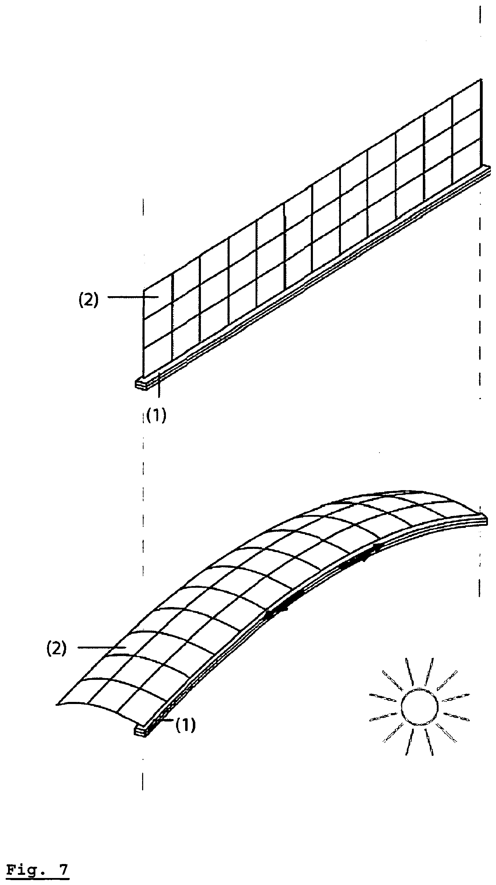

Gegenstand der vorliegenden Anmeldung ist eine Fassadenverschattung, welche auf der vorgestellten Kinematik beruht. Die erfindungsgemäße Fassadenverschattung ist in Fig. 4 dargestellt. Die Biegung des Stabes kann manuell oder durch Temperaturänderung in einem Verbundwerkstoff mit unterschiedlichen Ausdehnungskoeffizienten induziert werden (Fig. 7). Die Lamellen der Verschattung können horizontal (Fig. 5) oder vertikal (Fig. 4) angeordnet sein.

In einer Ausführungsform besteht der Stab (1) aus CFK, auf den eine Lamelle aus GFK laminiert ist. In einer Ausführungsform hat der Stab eine Länge von 1,5 m. Die Auslenkung der Stabmitte bei umgeklappter Lamelle beträgt 10 mm.

## Patentansprüche

1. Fassadenverschattung, umfassend mindestens einen gelenklosen, stufenlos verformbaren Klappmechanismus mit einem ersten Bauteil (1) und einem zweiten Bauteil (2),
welches erste Bauteil (1) stabförmig oder flächig ausgeführt ist,
welches zweite Bauteil (2) flächig ausgeführt ist,
welches erste Bauteil (1) an eine Kante des zweiten Bauteils (2) angeschlossen ist oder in dessen Fläche liegt,
welches erste Bauteil (1) mit dem zweiten Bauteil (2) gelenklos gekoppelt ist,
welches zweite Bauteil (2) als Lamelle ausgebildet ist,
wobei , wenn ausgehend von der Ausgangsposition eine Biegung des ersten Bauteils (1) in Richtung parallel zur Fläche des zweiten Bauteils zum einen durch Licht, Wärme oder Feuchtigkeit, oder zum anderen durch Lasten, Kräfte und/oder Verschiebungen induziert wird, sich das zweite Bauteil (2) auftretenden Biegezugspannungen entzieht, indem sich die Ausrichtung des zweiten Bauteils (2) gegenüber der Ausgangsposition zum Zwecke der Verschattung durch seitliches Umklappen und unter Bildung einer doppelt gekrümmten Oberfläche des zweiten Bauteils (2) entsprechend dem Maß der Biegung des ersten Bauteils (1) graduell und stufenlos verändert.

2. Fassadenverschattung nach Anspruch 1, bei der das zweite Bauteil (2) mit einem Obergurt verbundene Stäbe umfasst.

3. Fassadenverschattung nach einem der Ansprüche 1 oder 2, bei der auf dem zweiten Bauteil (2) sekundäre flächige Bauteile (2b) angeordnet sind.

4. Fassadenverschattung nach einem der Ansprüche 1 bis 3, bei der das zweite Bauteil (2) eine Vorkrümmung besitzt.

5. Fassadenverschattung nach Anspruch 4, bei der zwei gegensätzlich vorgekrümmte zweite Bauteile (2) auf dem ersten Bauteil (1) angeordnet sind.

6. Fassadenverschattung nach einem der Ansprüche 1 bis 5, bei der das erste Bauteil (1) durch eine lokale Aussteifung des zweiten Bauteils (2) gebildet ist.

7. Fassadenverschattung nach einem der Ansprüche 1 bis 6, bei der das erste und zweite Bauteil (1, 2) aus Kunststoff, faserverstärktem Kunststoff, Metall, Holzwerkstoff oder Kombinationen daraus bestehen.

8. Verwendung der Fassadenverschattung nach einem der Ansprüche 1 bis 7 in Verschattungs- und Sichtschutzsystemen in der Architektur.

## Claims

1. Façade shading, comprising at least one hingeless, steplessly deformable folding mechanism having a first component (1) and a second component (2),
which first component (1) is embodied in a rod-like or planar manner,
which second component (2) is embodied in a sheet-like manner,
which first component (1) is attached to one edge of the second component (2) or is located in the face thereof,
which first component (1) is coupled in a hingeless manner to the second component (2),
which second component (2) is in the form of a slat,
wherein, when starting from the starting position, a bend of the first component (1) in a direction parallel to the face of the second component is induced by light, heat or moisture or alternatively by loads, forces and/or displacements, the second component (2) withstands flexural tensile stresses in that the orientation of the second component (2) with respect to the starting position, for the purposes of shading, changes gradually and steplessly by lateral folding, with a doubly curved surface of the second component (2) being formed in accordance with the amount of bending of the first component (1) .

2. Façade shading according to Claim 1, wherein the second component (2) comprises rods connected to an upper chord.

3. Façade shading according to either of Claims 1 and 2, wherein secondary planar components (2b) are arranged on the second component (2).

4. Façade shading according to one of Claims 1 to 3, wherein the second component (2) has a pre-curve.

5. Façade shading according to Claim 4, wherein two oppositely pre-curved second components (2) are arranged on the first component (1).

6. Façade shading according to one of Claims 1 to 5, wherein the first component (1) has been formed by local reinforcement of the second component (2).

7. Façade shading according to one of Claims 1 to 6, wherein the first and second component (1, 2) consist of plastic, fibre-reinforced plastic, metal, wood-based material or combinations thereof.

8. Use of the façade shading according to one of Claims 1 to 7 in shading and privacy screen systems in architecture.

## Revendications

1. Dispositif d'ombrage de façade, comprenant au moins un mécanisme de rabattement sans articulation, déformable en continu, comprenant un premier composant (1) et un second composant (2),
dans lequel
le premier composant (1) est réalisé en forme de barreau ou de surface,
le second composant (2) est réalisé en forme de surface,
le premier composant (1) est raccordé à un bord du second composant (2) ou se situe dans sa surface,
le premier composant (1) est couplé sans articulation au second composant (2),
le second composant (2) est réalisé en forme de lamelle, lorsque, à partir de la position initiale, une flexion du premier composant (1) en direction parallèle à la surface du second composant est induite par lumière, chaleur ou humidité d'une part, ou par d'autres contraintes, forces et/ou déplacements d'autre part, le second composant (2) se dégage vis-à-vis des contraintes de traction par flexion qui apparaissent, grâce au fait que l'orientation du second composant (2) par rapport à la position initiale se modifie progressivement et en continu par rabattement latéral et par formation d'une courbure double de la surface du second composant (2) en correspondance de la valeur de la flexion du premier composant (1), afin d'obtenir un ombrage.

2. Dispositif d'ombrage de façade selon la revendication 1, dans lequel
le second composant (2) comprend des tiges reliées à un brin supérieur.

3. Dispositif d'ombrage de façade selon l'une des revendications 1 ou 2,
dans lequel
des composants (2b) surfaciques secondaires sont disposés sur le second composant (2).

4. Dispositif d'ombrage de façade selon l'une des revendications 1 à 3,
dans lequel
le second composant (2) présente une pré-courbure.

5. Dispositif d'ombrage de façade selon la revendication 4, dans lequel
deux seconds composants (2) pré-incurvés en sens opposés sont disposés sur le premier composant (1).

6. Dispositif d'ombrage de façade selon l'une des revendications 1 à 5,
dans lequel
le premier composant (1) est formé par une rigidification locale du second composant (2).

7. Dispositif d'ombrage de façade selon l'une des revendications 1 à 6,
dans lequel
le premier et le second composant (1, 2) sont constitués en matière plastique, en matière plastique renforcée de fibres, en métal, en matériau à base de bois ou en combinaisons de ceux-ci.

8. Utilisation du dispositif d'ombrage de façade selon l'une des revendications 1 à 7 dans des systèmes d'ombrage et de protection de vue dans l'architecture.
